# EUROPEAN PATENT SPECIFICATION

(11) **EP 2 586 735 B1**
(45) Date of publication and mention of the grant of the patent: **25.06.2014**
(21) Application number: 11187292.5
(22) Date of filing: 31.10.2011
(51) Int. Cl.: B65G 63/00, B66C 19/00

(54) **Ship to shore crane with dual trolleys**
Schiff-zu-Land-Kran mit zwei Laufwagen
Grue à deux chariots pour le trajet quai-bateau

(43) Date of publication of application: 01.05.2013
(73) Proprietor: Cargotec Netherlands B.V., 3081 AD Rotterdam (NL)
(72) Inventor: Kleiss, René Johannes Gerardus, 3081 AD Rotterdam (NL); de Jong, Walter, 2624 EM Delft (NL); Smit, Joseph Maria Antonius, 2636 HB Haarlem (NL); van der Veen, Gerardus Jacobus, 2611 RM Delft (NL)
(74) Representative: Nederlandsch Octrooibureau

(56) References cited:
- WO-A1-95/31396
- US-A- 3 467 263
- US-A- 3 881 608
- US-A- 4 018 349
- US-A1- 2002 102 150
- US-B2- 7 523 836

## Description

The invention is related to a ship to shore crane, comprising a gantry structure, a cantilever crane girder supported by the gantry structure, said gantry structure having a water side frame comprising legs between which the crane girder extends, a water side trolley supported by the crane girder and displaceable along a water side trajectory, a land side trolley supported with respect to the gantry structure and displaceable along a land side trajectory, and a container landing platform interposed between said trajectories, the water side trolley being displaceable over said water side trajectory for transferring a container between the ship and the landing platform and the land side trolley being displaceable over said land side trajectory for transferring a container between the shore and the landing platform, said trolleys each being provided with respective hoisting means and a respective spreader carried by said hoisting means.

Such a ship to shore crane is disclosed in US-A-4599027. By means of this prior art ship to shore crane, the containers are transferred in two stages. Each container which is transferred from the ship to the shore vice versa, will be placed onto the platform by one of the trolleys, and is subsequently removed there from by the other trolley. Thereby, it is envisaged to expedite the handling of the containers.

Container transport of goods has become widespread in all kinds of industry and trade. Consequently, there is a steady growth in the use of container ships. Furthermore, there is a trend towards larger sized container ships, transporting several thousands of containers at a time. Very large container ships may even carry the equivalent of 8.000 to 15.000 TEU's (twenty foot equivalent units) at a time. The costs associated with such ships has increased accordingly. In this connection, the time span during which such ships are moored in a harbour is of high importance. These cost are both associated with the downtime of the ship, as well as with the harbour fees involved. It has therefore become of the utmost importance to increase the efficiency of the container transfer between ship and shore, so as to limit the period of stay in a harbour.

With the aim of minimizing the time required for loading and unloading a container ship therefore, several cranes are applied at the same time for transferring containers between the quay and the ship. A container ship comprises numerous adjacent container bays which extend in the transverse direction of the container ship. Within each bay, containers are stacked next to and upon each other in the longitudinal direction of the ship. The ship to shore cranes are displaced along the quay up to a position for accessing these bays and the containers accommodated therein. The cantilever part of the boom extends above the full container bay, in such a way that all containers therein can be handled.

As a result of the particular construction of the ship to shore cranes, these cannot be moved so close to each other that directly adjacent become accessible in a simultaneous fashion. Each crane requires sufficient spacing between its legs to allow a 45 feet container to pass between said legs. Thus, the distance between individual legs of a crane is larger than the length of a single container, making it impossible for adjacent cranes to access directly adjacent bays. The ship to shore cranes are too wide, which means that always an inaccessible intermediate bay is left over between the two bays which are handled simultaneously. This has however disadvantages as to the efficiency of the handling process. In case it is desirable to access the intermediate bay, both cranes which border the intermediate bay are to be moved.

A ship to shore crane having a rotating trolley is disclosed in US 2002/0102150.

The object of the invention is therefore to provide a ship to shore crane installation which allows a more flexible handling of the containers in adjacent container bays. That object is achieved by the characterizing features of claim 1.

The water side trolley may transfer the container according to the original orientation thereof as located in the respective bay of the container ship, that is with its longitudinal direction oriented in accordance with the longitudinal direction of the quay. However, the slewing means allow the container to be rotated into an orientation in accordance with the transverse direction of the quay. Thus, the container can be transferred between the landing platform and the shore while oriented according to the transverse direction of the quay. Consequently, also over the part of the trajectory which is located between the legs of the water side platform, the container is likewise oriented according to the transverse direction of the quay. This offers the possibility to select a smaller intermediate spacing between the legs of the water side platform, without hampering the proper transfer of the container.

Thereby, the overall width of the container crane can be reduced, offering the possibility to locate the cranes closer to each other. Thus, it becomes possible to handle containers in directly adjacent bays of the ship by means of the directly adjacent and closely arranged ship to shore cranes.

Preferably, the landing platform is supported on the water side frame and projects with respect to the water side of said water side frame. Thus, the water side trolley has direct access to the landing platform, promoting an efficient loading/unloading process of said platform. Nevertheless, the landing platform could alternatively be positioned between the legs, or even projecting with respect to the land side of the water side frame. Although it is possible to arrange the slewing means on the water side trolley or the landing platform, preference is given to arrange the slewing means on the land side trolley. In that case, according to a first embodiment the land side trolley may have a cantilever arm which extends towards the water side, said cantilever arm supporting a swivel for rotating the respective hoisting means and spreader. Alternatively, the swivel may be connected to or incorporated in the spreader supported by one of the trolleys.

By means of a cantilever arm, the swivel together with hoisting means and spreader may be moved into the desired position, directly above a container which has previously been placed on the landing platform which projects with respect to the water side of the water side frame. Subsequently, the spreader can be coupled to the container in the usual way, and the container can be lifted away by the land side trolley. It will be clear that once the land side trolley has been moved away from the landing platform, the cantilever arm is no longer above said platform. This means that the landing platform is then freely accessible for the next container to be positioned thereon by the water side trolley.

The cantilever arm with swivel, hoisting means, spreader and the container coupled onto the spreader may exert an appreciable eccentric load on the land side trolley. With the aim of balancing this eccentric load, the land side trolley has been equipped with a balancing arm opposite the cantilever arm. Preferably, both the land side trolley and the balancing arm are supported with respect to a beam assembly of the gantry structure. Said beam assembly may comprise parallel beams which are connected to a respective leg of the water side frame, the trolley being arranged between said parallel beams.

According to a second embodiment, the land side trolley may supported by the crane girder itself. Here as well, the slewing means may be arranged on the water side trolley or the landing platform, however preference is given to arrange the slewing means on the land side trolley. The spreader and container suspended from the land side trolley may now be rotated and oriented in such a way that the longitudinal direction thereof becomes parallel to the longitudinal direction of the crane girder. Thereby, it is possible to displace the spreader and container through the relative narrow area defined between the legs are of the waterside frame. Preferably, a machinery housing is suspended from the land side trolley through the swivel.

The invention is furthermore related to a ship to shore crane installation, comprising a quay defining a longitudinal and a transverse direction, and at least two ship to shore cranes according to any of the preceding claims which are displaceable along the quay according to the longitudinal direction thereof. Such a ship to shore installation is known as well. As described before, in the case of these prior art installations problems may arise concerning the accessibility of directly adjacent bays of the ship which is being loaded/unloaded. In this connection, the ship to shore cranes according to the invention may provide a solution to this problem, in that parts of the gantry structures of directly adjacent ship to shore cranes overlap each other in the longitudinal direction of the quay.

As will be clear, the distance of the legs of the water side frames of the adjacent cranes are then positioned relatively close to each other; however the containers are nevertheless able to pass between these legs in the rotated position. Furthermore, the cranes may be positioned close to each other due to the fact the water side frames of directly adjacent ship to shore cranes are offset with respect to each other in the transverse direction of the quay.

In a preferred embodiment, the quay may be provided with at least two tracks which extend in the longitudinal direction, said tracks being offset with respect to each other in the transverse direction, and the ship to shore cranes are each provided with sets of support wheels, in such a way that the set of support wheels of one of the ship to shore cranes is supported by one of the tracks and the set of support wheels of a directly adjacent ship to shore crane is supported on another track.

The invention is furthermore related to the method of operating a ship to shore crane having a land side trolley provided with swivel for transferring a container from ship to shore, comprising subsequent the steps of:
- landing a container on the landing platform by means of the water side trolley,
- uncoupling the spreader of the water side trolley from the container,
- orienting the longitudinal direction of the spreader of the land side trolley in accordance with the longitudinal direction of the crane girder,
- displacing the land side trolley and spreader through the area defined between the legs of the water side frame,
- rotating and orienting the longitudinal direction of the spreader of the land side trolley in accordance with the longitudinal direction of the container on the landing platform,
- coupling the spreader onto said container,
- lifting said spreader and container from the landing platform,
- rotating and orienting the longitudinal direction of the spreader and the container coupled thereto in accordance with the longitudinal direction of the crane girder,
- displacing the landside trolley with thus oriented spreader and container through the area defined between the legs of the water side frame.

Alternatively, in the case of transferring a container from shore to ship, said method comprises the subsequent steps of;
- coupling a container located on the quay to the spreader of the land side trolley,
- lifting said spreader and container from the quay,
- orienting the longitudinal direction of the spreader and container in accordance with the longitudinal direction of the crane girder,
- displacing the land side trolley with the thus oriented spreader and container through the area defined between the legs of the waterside frame,
- rotating and orienting the longitudinal direction of the spreader and the container transverse with respect to the longitudinal direction of the crane girder,
- landing the container onto the landing platform,
- uncoupling the spreader of the landside trolley from the container,
- coupling the spreader of the waterside trolley onto the container located on the landing platform,
- lifting the spreader of the waterside trolley and the container coupled thereto from the landing platform.

The spreader and container in the aforementioned methods can be fully oriented according to the longitudinal direction of the crane girder, that is rotated over 90 ° with respect to the longitudinal direction of the quay. However, this rotation need not always be exactly 90°. Depending on the length of the container and the free area between the water side legs, smaller angles of rotation may be selected, for instance at least 60°.

The invention will now be described further with respect to an embodiment as shown in the drawings.
Figure 1 shows a view in perspective of the ship to shore crane installation according to the invention.
Figure 2 shows a side view of the ship to shore a crane.
Figures 3a-c show a ship to shore crane in perspective.
Figure 4 shows a top view of the ship to shore crane installation according to figure 1.
Figure 5 shows a side view of a further embodiment of the ship to shore crane.

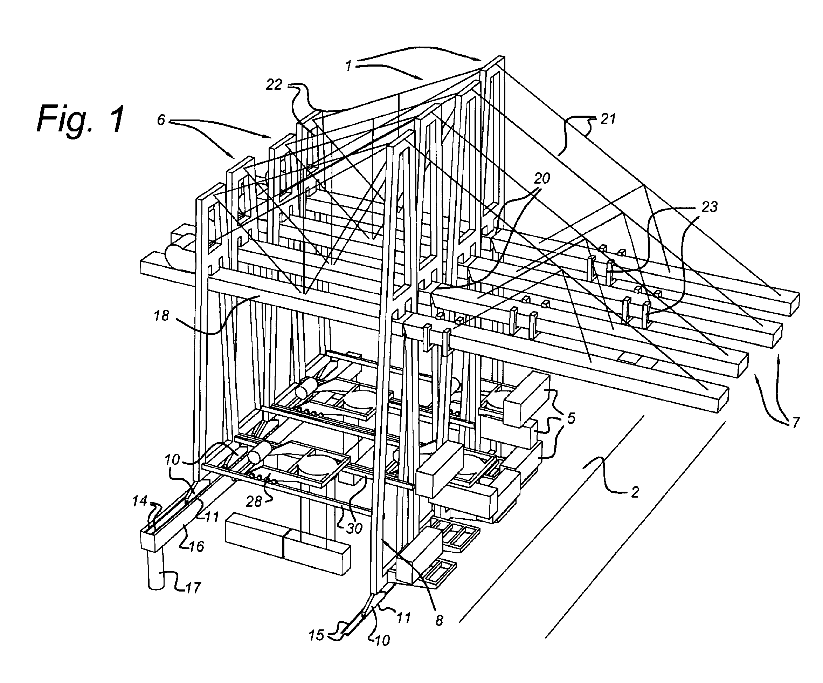

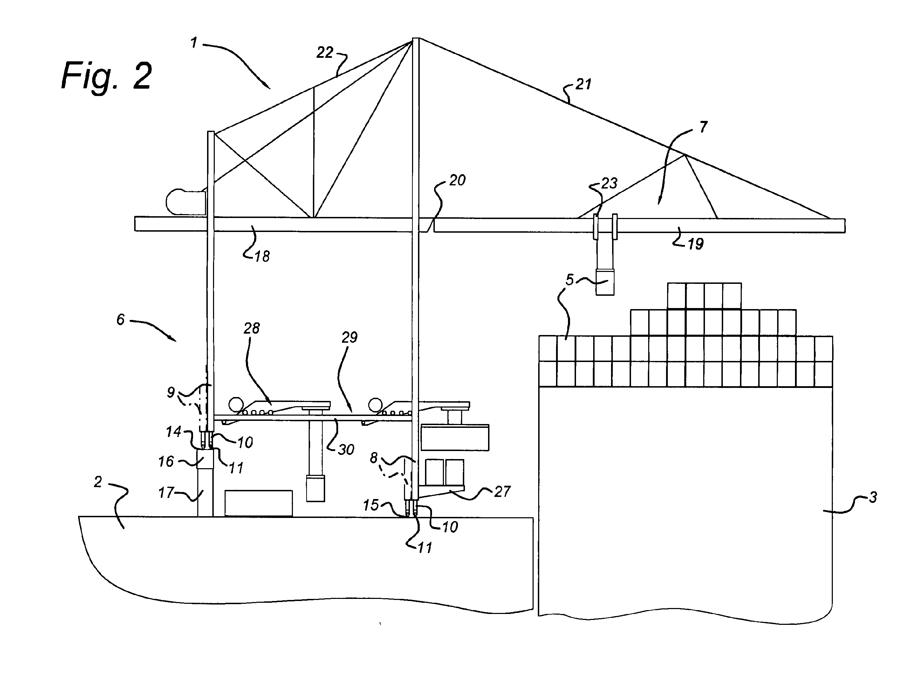

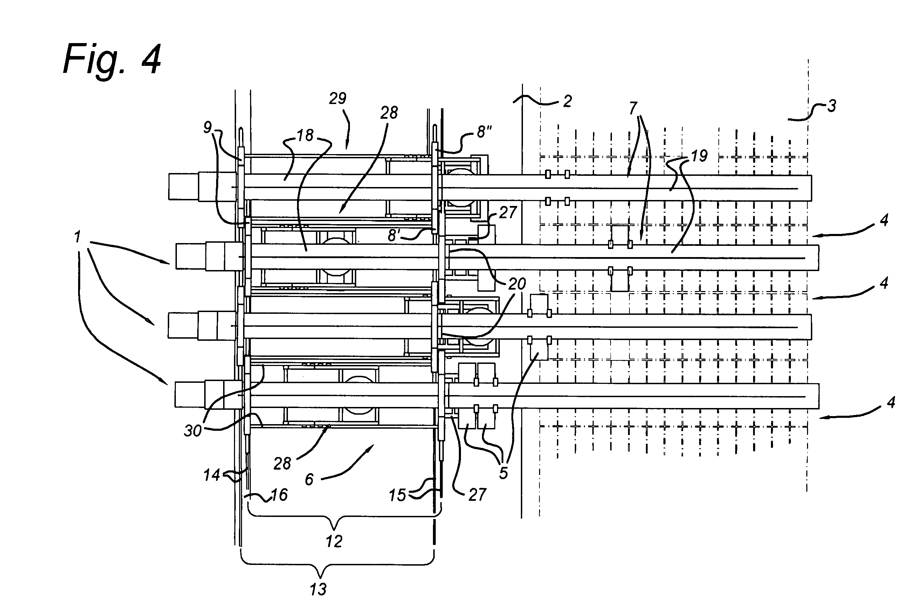

The ship to shore crane installation as shown in figures 1 and 4 comprises several ship to shore cranes 1 which are accommodated on the quay 2. The quay 2 borders a harbour with a container ship 3 as shown in figures 2 and 4. The hold of the container ship 3 has a plurality of container bays 4 which extend transverse with respect to the longitudinal direction of the ship 3. Within and above these container bays 4, the containers 5 are stacked upon and next to each other.

The ship to shore cranes 1 each have a gantry structure 6 supporting a boom structure 7. Each gantry 6 has a water side frame 8 and a land side frame 9, the lower ends of which are supported by means of crane travel mechanisms 10 with a plurality of wheels 11. Furthermore, the quay 2 has a water side track 12 and a land side track 13 for guiding the wheels 11 of the crane travel mechanisms 10. The water side track 12 and the water side track 13 largely overlap each other in transverse direction, however the overall position of the land side track is closer to the edge of the quay than the other track 13.

In the embodiment shown, each track 12, 13 consists of two parallel rails 14,15. The rail 14 which are located at the land side of each track 12, 13 are at higher level than the quay mounted rails 15. In particular, the land side rails 14 are accommodated on an elevated beam 16, supported by columns 17. Over the tracks 12, 13, the ship to shore cranes 1 may be displaced in longitudinal direction of the quay 2 so as to be positioned in the desired location with respect to the container bays 4.

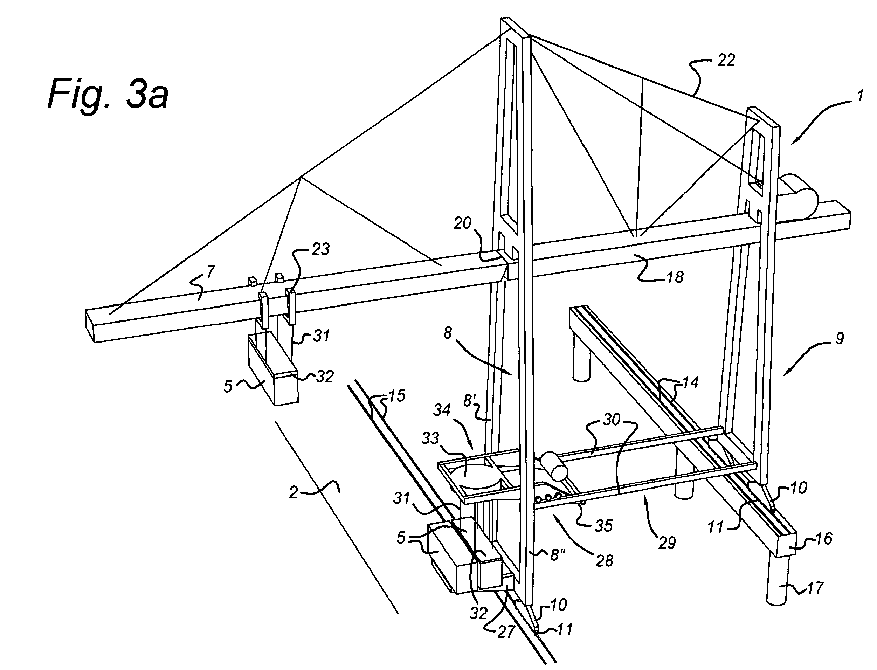

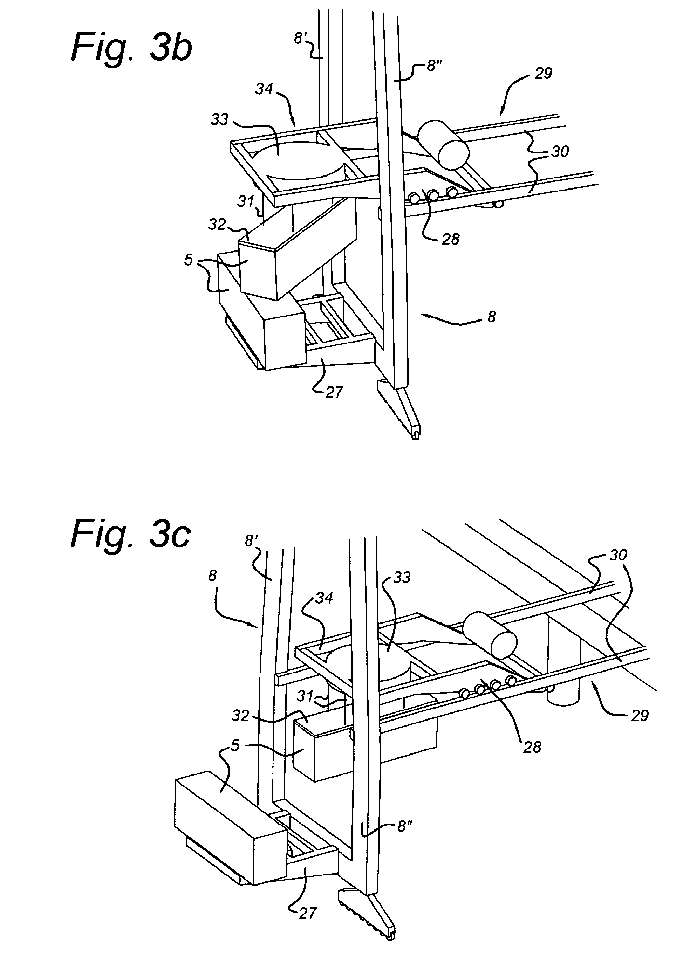

As a result of the offset position of the tracks 12, 13, the water side frames 8 of the ship to shore cranes 1 may be displaced somewhat along each other in the longitudinal direction, causing an overlap thereof as is visible in figures 1 and 3. Also the land side frames 9 may overlap each other in this way. The overall width of the ship to shore cranes 1, in particular the overall with of the water side frame 8 and the land side frame 9 has been reduced so as to enable a close distance with respect to each other of the directly adjacent ship to shore cranes 1. As a result, the boom structures 7 of directly adjacent ship to shore cranes may be positioned at the same pitch distance as the pitch distance between two directly adjacent container bays of the ship 3.

As is known, the boom structure 7 has a fixed boom section fixedly connected to the gantry structure 6, and a hinged boom section 19 connected to the fixed boom section through a hinge construction 20. The hinged boom section 19 is displaceable between an operative, horizontal position and an upwardly swung position. Furthermore a tension member 22 has been provided for stabilizing the hinged boom section.

The boom structure 7 carries a water side trolley 23, which travels back and forth, up to the water side frame 8. Onto the water side frame 8, a landing platform 27 has been mounted which in the embodiment shown projects with respect to the water side of the water side frame 8. Furthermore, a beam structure 29 extends between the water side frame 8 and the land side frame 9. Said beam structure 29, which comprises two beams 30, supports a land side trolley 28. Both the water side trolley 23 and the land side trolley 28 are equipped with the usual lifting means 31, comprising cables which are known per se, which in turn support a spreader 32, known per as well and equipped with coupling means for a container.

The crane according to the invention is operated as follows. By means of the water side trolley 23, containers 5 are transferred between the ship and the landing platform 27. Furthermore, by means of the land side trolley 28, the containers 5 are transferred between the landing platform 27 and the quay 2. Thereby, the handling of the containers is expedited, as the trolleys 23, 27 operate in tandem.

The width of the space which is left over between the legs 8', 8" of the water side frame 8, and between which the containers are to be transferred, has been reduced in comparison to the space available in traditional ship to shore cranes. Moreover, the fact that the legs are 8', 8" of adjacent ship to shore cranes 1 overlap each other, may further reduce the available space for transferring the containers. In particular the largest containers have a length which is larger than the intermediate distance between said legs.

For the purpose of nevertheless transferring the containers 5 through the space between the legs 8', 8" of the water side frame 8, the land side trolley 28 has been equipped with a swivel 33. This swivel 33 carries the lifting means 31 and thereby the spreader 32. As shown in figures 3a-c, a container 5 is lifted from the landing platform 27 (figure 3a), and is subsequently rotated by means of the swivel 33 (figure 3b). Once the container 5 has been rotated over and about 90 (figure 3c), it can easily be transferred through the space as defined by the legs 8', 8" of the water side frame 8.

The swivel 33 has been mounted on a cantilever arm 34 which extends with respect to the land side trolley 28 towards the water side. Thus, the swivel 33 and cantilever arm 34 can be brought in position directly above the landing platform 27. As shown in figure 3c, once the land side trolley 28 is moved towards the land side, the landing platform 27 is freely accessible for the water side trolley 23 and the container 5 suspended there from. Thus, said container 5 can be landed without further problems, directly onto the landing platform 27.

For the purpose of taking the eccentric load which is exerted by means of the container 5 hanging on the cantilever arm 34, a balancing armed 35 has been provided on the land side trolley 28, opposite said cantilever arm 34. The balancing arm 35 engages the underside of the beams 13, so as to counteract said eccentric load.

Although in the embodiment shown the container 5 is rotated by means of the swivel connected to the land side trolley 28, is also possible to incorporate the swivel in the landing platform 27 itself. In such a case, the container 5 is landed on said landing platform 27 as well, but is additionally rotated while resting on the landing platform 27. Subsequently, the container 5 as already rotated is then lifted from the landing platform by means of the hoisting means 31 and spreader 32, which are now directly attached to the cantilever arm 34.

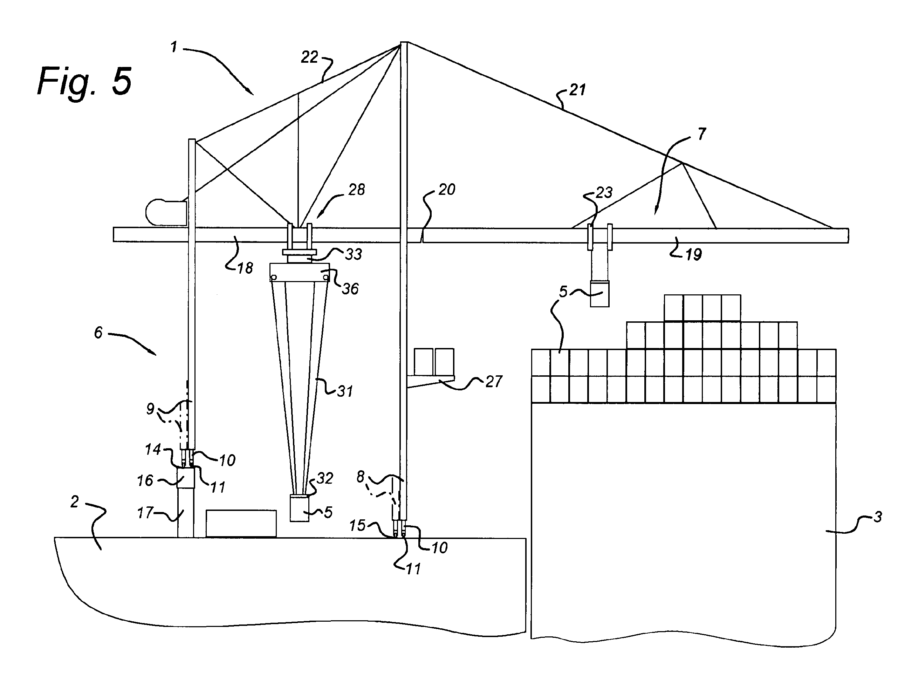

The embodiment of figure 5 shows a further embodiment of the ship to shore crane, wherein the land side trolley 28 is suspended from the crane girder 7. The machinery housing 36 is suspend below the trolley 28 by means of the swivel 33. The cables 31 which support the spreader 32 are directly cooperating with the machinery such as winches within the housing 36. By rotating the housing 36 through the swivel 33, the spreader 32 and container 5 coupled thereto are rotated as well. Thus, the spreader 32 and container 5 can be brought form the transverse orientation as shown in figure 5, into the longitudinal orientation for displacing them trough the water side frame 8.

### List of reference numerals

- 1.: Ship to shore crane
- 2.: Quay
- 3.: Container ship
- 4.: Container bay
- 5.: Container
- 6.: Gantry structure
- 7.: Boom structure
- 8.: Water side frame of gantry structure
- 8', 8": Legs of water side frame
- 9.: Land side frame of gantry structure
- 10.: Crane travel mechanism
- 11.: Wheel of crane travel mechanism
- 12.: Water side track
- 13.: Land side track
- 14.: Land side rails of tracks
- 15.: Water side rails of tracks
- 16.: Beam
- 17.: Column
- 18.: Bridge girder
- 19.: Boom girder
- 20.: Hinge
- 21.: Pull member
- 22.: Tension member
- 23.: Water side trolley
- 24.: Slewing ring
- 25.: Spacing of legs
- 26.: Length of container
- 27.: Landing platform
- 28.: Land side trolley
- 29.: Beam structure
- 30.: Beam
- 31.: Lifting cables
- 32.: Spreader
- 33.: Swivel
- 34.: Cantilever arm
- 35.: Balancing arm
- 36.: Machinery housing

## Claims

1. Ship to shore crane (1), comprising a gantry structure (6), a cantilever crane girder (7) supported by the gantry structure, said gantry structure (6) having a water side frame (8) comprising legs (8', 8") between which the crane girder (7) extends, a water side trolley (23) supported by the crane girder and displaceable along a water side trajectory, a land side trolley (28) supported with respect to the gantry structure and displaceable along a land side trajectory, and a container landing platform (27) interposed between said trajectories, the water side trolley (28) being displaceable over said water side trajectory for transferring a container between the ship (3) and the landing platform (27) and the land side trolley (28) being displaceable over said land side trajectory for transferring a container between the shore (2) and the landing platform (27), said trolleys (23, 28) each being provided with respective hoisting means (31) and a respective spreader (32) carried by said hoisting means, **characterised by** slewing means (33) for performing a rotation of a container (5) with respect to the vertical, said slewing means being supported by either the water side trolley (23), the land side trolley (28) or the landing platform (27), wherein the size of the intermediate space between the legs (8', 8") of the water side frame (8) is smaller than the length of the spreader (32) and/or the container (5).

2. Ship to shore crane (1) according to claim 1, wherein the landing platform (27) is supported on the water side frame (8) and projecting with respect to the water side of said water side frame.

3. Ship to shore crane (1) according to claim 2, wherein the land side trolley (27) has a cantilever arm (34) which extends towards the water side, said cantilever arm supporting a swivel (33) for rotating the respective hoisting means (31) and spreader (32).

4. Ship to shore crane (1) according to claim 3, wherein the land side trolley (28) has a balancing arm (35) opposite the cantilever arm (34).

5. Ship to shore crane (1) according to claim 4, wherein the land side trolley (28) and the balancing arm (35) are supported with respect to a beam assembly (29) of the gantry structure (6).

6. Ship to shore crane according to claim 5, wherein the beam assembly (29) comprises parallel beams (30) which are connected to a respective leg (8', 8") of the water side frame (8), the land side trolley (28) being arranged between said parallel beams (30).

7. Ship to shore crane according to claim 1 or 2, wherein the land side trolley (28) is supported by the crane girder (7).

8. Ship to shore crane according to claim 7, wherein a machinery housing is suspended from the land side trolley (28) through the swivel (33), said machinery comprising apparatus for handling the hoisting means.

9. Ship to shore crane installation, comprising a quay (2) defining a longitudinal and a transverse direction, and at least two ship to shore cranes (1) according to any of the preceding claims which are displaceable along the quay according to the longitudinal direction thereof, **characterised in that** parts of the gantry structures (6) of directly adjacent ship to shore cranes (1) overlap each other in the longitudinal direction of the quay (2).

10. Ship to shore crane installation according to claim 9, wherein the gantry structures (6) of directly adjacent ship to shore cranes are offset with respect to each other in the transverse direction of the quay (2).

11. Ship to shore crane installation according to claim 9 or 10, wherein the water side frames (8) of directly adjacent ship to shore cranes (1) are offset with respect to each other in the transverse direction of the quay (2).

12. Ship to shore crane installation according to any of claims 9-11, wherein the quay (2) is provided with at least two tracks (12, 13) which extend in the longitudinal direction, said tracks being offset with respect to each other in the transverse direction, and the ship to shore cranes (1) are each provided with sets of support wheels (11), in such a way that the set of support wheels of one of the ship to shore cranes is supported by one of the tracks and the set of support wheels of a directly adjacent ship to shore crane is supported on another track.

13. Method of operating a ship to shore crane according to any of claims 1-8 for transferring a container from ship to shore, said ship to shore crane having a land side trolley (28) provided with swivel (33), comprising subsequent the steps of:
- landing a container on the landing platform (27) by means of the water side trolley (23),
- uncoupling the spreader of the water side trolley from the container,
- orienting the longitudinal direction of the spreader (32) of the land side trolley (28) in accordance with the longitudinal direction of the crane girder (7),
- displacing the spreader through the area defined between the legs (8', 8") of the water side frame (8),
- rotating and orienting the longitudinal direction of the spreader (32) of the land side trolley (28) in accordance with the longitudinal direction of the container on the landing platform (27),
- coupling the spreader (32) onto said container (5),
- lifting said spreader (32) and container (5) from the landing platform (27),
- rotating and orienting the longitudinal direction of the spreader (32) and the container (5) coupled thereto in accordance with the longitudinal direction of the crane girder (7),
- displacing the thus oriented spreader (32) and container (5) through the area defined between the legs (8', 8") of the water side frame (8).

14. Method for operating a ship to shore crane according to any of claims 1-8, for transferring a container (5) from shore to ship, said ship to shore crane having a land side trolley (28) provided with swivel (33), comprising the subsequent steps of;
- coupling a container (5) located on the quay (2) to the spreader (32) of the land side trolley (28),
- lifting said spreader (32) and container (5) from the quay (2),
- orienting the longitudinal direction of the spreader (32) and container (5) in accordance with the longitudinal direction of the crane girder (7),
- displacing the land side trolley (28) with the thus oriented spreader (32) and container (5) through the area defined between the legs (8', 8") of the waterside frame (8),
- rotating and orienting the longitudinal direction of the spreader (32) and the container (5) transverse with respect to the longitudinal direction of the crane girder (7),
- landing the container (5) onto the landing platform (27),
- uncoupling the spreader (32) of the landside trolley (28) from the container (5),
- coupling the spreader (32) of the waterside trolley (23) onto the container (5) located on the landing platform (27),
- lifting the spreader (32) of the waterside trolley (23) and the container (5) coupled thereto from the landing platform ( 27).

## Patentansprüche

1. Schiff-zu-Land-Kran (1) mit einer Kranportalstruktur (6), einem vorstehenden Kranträger (7), der von der Kranportalstruktur getragen wird, wobei die Kranportalstruktur (6) einen wasserseitigen Gerüstrahmen (8) mit Beinen (8', 8") hat, zwischen denen der Kranträger (7) verläuft, eine wasserseitige Krankatze (23), die von dem Kranträger getragen wird und entlang eines wasserseitigen Laufweges verfahrbar ist, eine landseitige Krankatze (28), die in Bezug auf die Krankportalstruktur getragen wird und entlang einer landseitigen Laufbahn verfahrbar ist, und eine Container-Auflageplattform (27) aufweist, die zwischen den Laufwegen angeordnet ist, wobei die wasserseitige Krankatze (28) über den wasserseitigen Laufweg verfahrbar ist, um einen Container zwischen dem Schiff (3) und der Auflageplattform (27) zu transportieren, und die landseitige Krankatze (28) über den landseitigen Laufweg verfahrbar ist, um einen Container zwischen dem Land (2) und der Auflageplattform (27) zu transportieren, wobei die Krankatzen (23, 28) jede mit einem Hebezeug (31) und einer Traverse (32) versehen ist, die von dem Hebezeug getragen wird, **gekennzeichnet durch** eine Schwenkeinrichtung (33), um eine Drehung eines Containers (5) in Bezug auf die Vertikale auszuführen, wobei die Schwenkeinrichtung entweder von der wasserseitigen Krankatze (23), der landseitigen Krankatze (28) oder der Auflageplattform (27) getragen wird, wobei die Größe des Zwischenraums zwischen den Beinen (8', 8") des wasserseitigen Gerüstrahmens (8) kleiner als die Länge der Traverse (32) und/oder des Containers (5) ist.

2. Schiff-zu-Land-Kran (1) nach Anspruch 1, wobei die Auflageplattform (27) an dem wasserseitigen Gerüstrahmen (8) gelagert ist und über die Wasserseite des wasserseitigen Gerüstrahmens vorsteht.

3. Schiff-zu-Land-Kran (1) nach Anspruch 2, wobei die landseitige Krankatze (27) einen Auslegerarm (34) hat, der zu der Wasserseite hin verläuft, wobei der Auslegerarm ein Drehgelenk (33) trägt, um das jeweilige Hebezeug (31) und die Traverse (32) zu drehen.

4. Schiff-zu-Land-Kran (1) nach Anspruch 3, wobei die landseitige Krankatze (28) einen Ausgleichsarm (35) gegenüber dem Auslegerarm (34) hat.

5. Schiff-zu-Land-Kran (1) nach Anspruch 4, wobei die landseitige Krankatze (28) und der Ausgleichsarm (35) sich abstützen in Bezug auf einen Trägeraufbau (29) der Kranportalstruktur (6).

6. Schiff-zu-Land-Kran (1) nach Anspruch 5, wobei der Trägeraufbau (29) parallele Träger (30) aufweist, die mit einem jeweiligen Bein (8`, 8") des wasserseitigen Gerüstrahmens (8) verbunden sind, wobei die landseitige Krankatze (28) zwischen den parallelen Trägem (30) angeordnet ist.

7. Schiff-zu-Land-Kran (1) nach Anspruch 1 oder 2, wobei die landseitige Krankratze (28) von dem Kranträger (7) getragen wird.

8. Schiff-zu-Land-Kran (1) nach Anspruch 7, wobei ein Maschinengehäuse an der landseitigen (28) Krankatze durch das Drehgelenk (33) aufgehängt ist, wobei die Maschinen Vorrichtungen zum Bedienen der Hebezeuge aufweisen.

9. Schiff-zu-Land-Kran-Installation mit einem Kai (2), der eine Längs- und eine Querrichtung definiert, und wenigstens zwei Schiff-Zu-Land-Kränen (1) nach einem der vorhergehenden Ansprüche, die entlang des Kais in dessen Längsrichtung beweglich sind, **dadurch gekennzeichnet, dass** Teile der Kranportalstrukturen (6) von direkt benachbarten Schiff-Zu-Land-Kränen (1) einander in Längsrichtung des Kais (2) überlappen.

10. Schiff-zu-Land-Kran-Installation nach Anspruch 9, wobei die Kranportalstrukturen (6) von direkt benachbarten Schiff-Zu-Land-Kränen zueinander in Querrichtung des Kais (2) versetzt sind.

11. Schiff zu-Land-Kran-Installation nach Anspruch 9 oder 10, wobei die wasserseitigen Gerüstrahmen (8) von direkt benachbarten Schiff-Zu-Land-Kränen (1) zueinander in Querrichtung des Kais (2) versetzt sind.

12. Schiff-zu-Land-Kran-Installation nach einem der Ansprüche 9 bis 11, wobei der Kai (2) mit wenigstens zwei Bahnen (12, 13) ausgerüstet ist, die in Längsrichtung verlaufen, wobei die Bahnen in Querrichtung zueinander versetzt sind und wobei die Schiff-Zu-Land-Kräne (1) jeweils mit Sätzen von Stützrädern (11) in der Weise versehen sind, dass der Satz von Stützrädern von einem der Schiff-Zu-Land-Kräne durch eine der Bahnen unterstützt wird und der Satz von Stützrädern eines direkt benachbarten Schiff-Zu-Land-Krans durch eine andere Bahn unterstützt wird.

13. Verfahren zum Betreiben eines Schiff-zu-Land-Krans nach einem der Ansprüche 1 bis 8 zum Transportieren eines Containers vom Schiff an Land, wobei der Schiff-Zu-Land-Kran eine landseitige Krankatze (28) aufweist, die mit einem Drehgelenk (33) versehen ist, mit den aufeinanderfolgenden Schritten:
- Absetzen eines Containers auf der Auflageplattform (27) durch die wasserseitige Krankatze (23),
- Lösen der Traverse der wasserseitigen Krankatze von dem Container,
- Orientieren der Längsrichtung der Traverse (32) der landseitigen Krankatze (28) entsprechend der Längsrichtung des Kranträgers (7),
- Verfahren der Traverse durch das zwischen den Beinen (8', 8") des wasserseitigen Gerüstrahmens (8) definierte Gebiet,
- Drehen und Orientieren der Längsrichtung der Traverse (32) der landseitigen Krankatze (28) entsprechend der Längsrichtung des Containers auf der Auflageplattform (27),
- Befestigen der Traverse (32) an dem Container (5),
- Anheben der Traverse (32) und des Containers (5) von der Auflageplattform (27),
- Drehen und Orientieren der Längsrichtung der Traverse (32) und des daran befestigten Containers (5) entsprechend der Längsrichtung des Kranträgers (7),
- Verfahren der so orientierten Traverse (32) und des Containers (5) durch das zwischen den Beinen (8', 8") des wasserseitigen Gerüstrahmens (8) definierte Gebiet.

14. Verfahren zum Betreiben eines Schiff-zu-Land-Krans nach einem der Ansprüche 1 bis 8, zum Transportieren eines Containers (5) vom Land zum Schiff, wobei der Schiff-zu-Land-Kran eine landseitige Krankatze (28) hat, die mit einem Drehgelenk (33) versehen ist, mit den aufeinanderfolgenden Schritten:
- Befestigen eines auf dem Kai (2) befindlichen Containers (5) an der Traverse (32) der landseitigen Krankatze (28),
- Anheben der Traverse (32) und des Containers (5) von dem Kai (2),
- Orientieren der Längsrichtung der Traverse (32) und des Behälters (5) entsprechend der Längsrichtung des Kranträgers (7),
- Verfahren der landseitigen Krankatze (28) mit der so orientierten Traverse (32) und dem Behälter (5) durch das zwischen den Beinen (8', 8") des wasserseitigen Gerüstrahmens (8) definierte Gebiet,
- Drehen und Orientieren der Längsrichtung der Traverse (32) und des Behälters (5) quer in Bezug auf die Längsrichtung des Kranträgers (7),
- Absetzen des Containers (5) auf die Auflageplattform (27),
- Lösen der Traverse (32) der landseitigen Krankatze (28) von dem Container (5),
- Befestigen der Traverse (32) der wasserseitigen Krankatze (23) an dem sich auf der Auflageplattform (27) befindlichen Container (5),
- Anheben der Traverse (32) der wasserseitigen Krankatze (23) und des daran befestigten Containers (5) von der Auflageplattform (27).

## Revendications

1. Grue pour le trajet navire-sol (1) comprenant une structure de portique (6), un poutre de grue en porte-à-faux (7) supportée par la structure de portique, ladite structure de portique (6) ayant un cadre côté eau (8) comprenant des jambes (8', 8"), entre lesquelles la poutre de grue (7) s'étend, un chariot côté eau (23) supporté par la poutre de grue et déplaçable le long d'une trajectoire côté eau, un chariot côté terre (28) supporté par rapport à la structure de portique et déplaçable le long d'une trajectoire côté terre, et une plateforme de débarquement de conteneur (27) interposée entre lesdites trajectoires, le chariot côté eau (28) étant déplaçable sur ladite trajectoire côté eau pour transférer un conteneur entre le navire (3) et la plateforme de débarquement (27) et le chariot côté terre (28) étant déplaçable sur ladite trajectoire côté terre pour transférer un conteneur entre le sol (2) et la plateforme de débarquement (27), lesdits chariots (23, 28) étant dotés chacun de moyens de levage (31) respectifs et d'un palonnier (32) respectif porté par lesdits moyens de levage, **caractérisée par** des moyens de pivotement (33) pour réaliser une rotation d'un conteneur (5) par rapport à la verticale, lesdits moyens de pivotement étant supportés par le chariot côté eau (23), le chariot côté terre (28) ou la plateforme de débarquement (27), dans laquelle la taille de l'espace intermédiaire entre les jambes (8', 8") du cadre côté eau est inférieure à la longueur du palonnier (32) et/ou du conteneur (5).

2. Grue pour le trajet navire-sol (1) selon la revendication 1, dans laquelle la plateforme de débarquement (27) est supportée sur le cadre côté eau (8) et fait saillie par rapport au côté eau dudit cadre côté eau.

3. Grue pour le trajet navire-sol (1) selon la revendication 2, dans laquelle le chariot côté terre (27) présente un bras en porte-à-faux (34) qui s'étend vers le côté eau, ledit bras en porte-à-faux supportant un pivot (33) pour faire tourner les moyens de levage (31) et le palonnier (32) respectifs.

4. Grue pour le trajet navire-sol (1) selon la revendication 3, dans laquelle le chariot côté terre (28) présente un bras d'équilibrage (35) opposé au bras en porte-à-faux (34).

5. Grue pour le trajet navire-sol (1) selon la revendication 4, dans laquelle le chariot côté terre (28) et le bras d'équilibrage (35) sont supportés par rapport à l'ensemble de poutre (29) de la structure de portique (6).

6. Grue pour le trajet navire-sol selon la revendication 5, dans laquelle l'ensemble de poutre (29) comprend des poutres parallèles (30) qui sont reliées à une jambe respective (8', 8") du cadre côté eau (8), le chariot côté terre (28) étant agencé entre lesdites poutres parallèles (30).

7. Grue pour le trajet navire-sol selon la revendication 1 ou 2, dans laquelle le chariot côté terre (28) est supporté par la poutre de grue (7).

8. Grue pour le trajet navire-sol selon la revendication 7, dans laquelle un carter machine est suspendu du chariot côté terre (28) au moyen du pivot (33), ladite machinerie comprenant l'appareil pour manipuler les moyens de levage.

9. Installation de grue pour le trajet navire-sol comprenant un quai (2) définissant une direction longitudinale et une direction transversale, et au moins deux grues pour le trajet navire-sol (1) selon l'une quelconque des revendications précédentes, qui sont déplaçables le long du quai selon sa direction longitudinale, **caractérisée en ce que** des parties des structures de portique (6) des grues (1) pour le trajet navire-sol directement adjacentes se chevauchent dans la direction longitudinale du quai (2).

10. Installation de grue pour le trajet navire-sol selon la revendication 9, dans laquelle les structures de portique (6) des grues pour le trajet navire-sol directement adjacentes sont en déport l'une par rapport à l'autre dans la direction transversale du quai (2).

11. Installation de grue pour le trajet navire-sol selon la revendication 9 ou 10, dans laquelle les cadres côté eau (8) des grues pour le trajet navire-sol (1) directement adjacentes sont en déport l'un par rapport à l'autre dans la direction transversale du quai (2).

12. Installation de grue pour le trajet navire-sol selon l'une quelconque des revendications 9 à 11, dans laquelle le quai (2) est doté d'au moins deux voies (12, 13) qui s'étendent dans la direction longitudinale, lesdites voies étant en déport l'une par rapport à l'autre dans la direction transversale, et les grues pour le trajet navire-sol (1) sont chacune dotées d'ensembles de roues porteuses (11), de telle manière que l'ensemble de roues porteuses de l'une des grues pour le trajet navire-sol soit supporté par l'une des voies et l'ensemble de roues porteuses d'une grue pour le trajet navire-sol directement adjacente soit supporté sur une autre voie.

13. Méthode de fonctionnement d'une grue pour le trajet navire-sol selon l'une quelconque des revendications 1 à 8 pour le transfert d'un conteneur du navire au sol, ladite grue pour le trajet navire-sol ayant un chariot côté terre (28) doté d'un pivot (33), comprenant les étapes ultérieures suivantes :
- débarquer un conteneur sur la plateforme de débarquement (27) à l'aide du chariot côté eau (23),
- découpler le palonnier du chariot côté eau du conteneur,
- orienter la direction longitudinale du palonnier (32) du chariot côté terre (28) selon la direction longitudinale de la poutre de grue (7),
- déplacer le palonnier à travers la zone définie entre les jambes (8', 8") du cadre côté eau (8),
- faire tourner et orienter la direction longitudinale du palonnier (32) du chariot côté terre (28) selon la direction longitudinale du conteneur sur la plateforme de débarquement (27),
- coupler le palonnier (32) audit conteneur (5),
- lever ledit palonnier (32) et le conteneur (5) de la plateforme de débarquement (27),
- faire tourner et orienter la direction longitudinale du palonnier (32) et du conteneur (5) couplé à celui-ci selon la direction longitudinale de la poutre de grue (7),
- déplacer le palonnier (32) et le conteneur (5) ainsi orientés à travers la zone définie entre les jambes (8', 8") du cadre côté eau (8).

14. Méthode de fonctionnement d'une grue pour le trajet navire-sol selon l'une quelconque des revendications 1 à 8 pour le transfert d'un conteneur (5) du sol au navire, ladite grue pour le trajet navire-sol ayant un chariot côté terre (28) doté d'un pivot (33), comprenant les étapes ultérieures suivantes :
- coupler un conteneur (5) situé sur le quai (2) au palonnier (32) du chariot côté terre (28),
- lever ledit palonnier (32) et le conteneur (5) du quai (2)
- orienter la direction longitudinale du palonnier (32) et du conteneur (5) selon la direction longitudinale de la poutre de grue (7),
- déplacer le chariot côté terre (28) avec le palonnier (32) et le conteneur (5) ainsi orientés à travers la zone définie entre les jambes (8', 8") du cadre côté eau (8),
- faire tourner et orienter la direction longitudinale du palonnier (32) et du conteneur (5) transversalement à la direction longitudinale de la poutre de grue (7),
- débarquer le conteneur (5) sur la plateforme de débarquement (27),
- découpler le palonnier (32) du chariot côté terre (28) du conteneur (5),
- coupler le palonnier (32) du chariot côté eau (23) au conteneur (5) situé sur la plateforme de débarquement (27),
- lever le palonnier (32) du chariot côté eau (23) et du conteneur (5) couplé à celui-ci de la plateforme de débarquement (27).
